# EUROPEAN PATENT APPLICATION

(11) **EP 4 360 740 A1**
(43) Date of publication of application: **01.05.2024**
(21) Application number: 23204155.8
(22) Date of filing: 17.10.2023
(51) Int. Cl.: B01D 53/047, B01D 53/22

(54) **PROCESS FOR PRODUCING VERY HIGH PURITY HELIUM OR HYDROGEN**

(30) Priority: 24.10.2022 US 202217972142
(71) Applicant: L'AIR LIQUIDE, SOCIETE ANONYME POUR L'ETUDE ET L'EXPLOITATION DES PROCEDES GEORGES CLAUDE, 75007 Paris (FR); Air Liquide Advanced Technologies U.S. LLC, Houston, Texas 77024 (US)
(72) Inventor: TERRIEN, Paul, New York, 12020 (US); GUERIF, Pierre-Philippe, Houston, 77024 (US)
(74) Representative: Air Liquide

(57) **Abstract**

A method of purifying a gas composed of a product gas and one or more impurity gases, comprising:
- combining a first feed stream (115) with a second stream (108) thereby forming a combined feed stream (404),
- introducing the combined feed stream (404) into a first pressure swing adsorption device (405), thereby producing a first high purity gas stream (407) and a first off-gas stream (406), and
- introducing the first off-gas stream (406) into a membrane separation device (104), thereby producing a gas stream lean in high purity gas stream (105) and a permeate stream (106).

## Description

Helium is a very valuable molecule present generally in very small amounts in natural mixtures of gases, such as natural gas extracted from oil and gas fields. In order to use it, it has to be separated and purified from the mixture containing it to a degree of purity varying depending of the application. Purification can be achieved through various industrial processes ranging from cryogenic processes to adsorption and membrane separation. The prior art does not provide an efficient solution to purify a stream with a high concentration of helium to start with and even less how to optimize said purification in the presence of a second stream with a lower helium content as opposed to the first one.

This invention relates to one such method of helium purification using Pressure Swing Adsorption (PSA) process, in particular from a stream with a significant helium content to start with but to be purified to a very high quality. This invention also extends to hydrogen purification.

For this purpose, the invention proposes a method of purifying a gas composed of a product gas and one or more impurity gases, comprising:
- combining a first feed stream with a second stream thereby forming a combined feed stream,
- introducing the combined feed stream into a first pressure swing adsorption device, thereby producing a first high purity gas stream and a first off-gas stream, and
- introducing the first off gas stream into a membrane separation device, thereby producing a gas stream lean in high purity gas stream and a permeate stream..

In one embodiment, the second stream is the permeate stream.

In one embodiment, the product gas is helium.

In one embodiment, the product gas is hydrogen.

In one embodiment, the method further comprising:
- introducing the first feed stream along with a first oxygen-containing stream into a first catalytic oxidation unit, thereby producing a first oxidized feed stream, and
- combining the first oxidized feed stream with the second stream thereby forming the combined feed stream.

Such a second stream is acting as a purified gas stream.

In one embodiment, the method further comprising:
- introducing the permeate stream into a second pressure swing adsorption device, thereby producing the second stream and a second off-gas stream,
- combining a second feed stream with the second off-gas stream, thereby forming a combined membrane feed stream,
- introducing the combined membrane feed stream into the membrane separation device, thereby producing the gas stream lean in high purity gas stream and the permeate stream, and
- introducing the first off gas stream into the second pressure swing adsorption device.

In one embodiment, the method further comprising:
- introducing at least a portion of the permeate stream along with a first oxygen-containing stream into a first catalytic oxidation unit thereby producing a first oxidized stream, and
- introducing the first oxidized stream into the second pressure swing adsorption device, thereby producing the second stream and the second off-gas stream.

In one embodiment, the method further comprising:
- introducing at least a portion of the combined feed stream along with a second oxygen-containing stream into a second catalytic oxidation unit, thereby producing a second oxidized stream, and
- introducing the second oxidized stream into the first pressure swing adsorption device, thereby producing the first high purity gas stream and the first off gas stream.

In one embodiment, the method further comprising:
- introducing the permeate stream into a second pressure swing adsorption device, thereby producing the second stream and a second off-gas stream,
- combining a second feed stream with the second off-gas stream, thereby forming a combined membrane feed stream,
- introducing the combined membrane feed stream into the membrane separation device, thereby producing the gas stream lean in high purity gas stream and the permeate stream,
- introducing the first off gas stream into the second pressure swing adsorption device,
- dividing the combined feed stream into a first portion and a second portion,
- introducing the second portion into a third pressure swing adsorption device, thereby producing a second high purity gas stream and a third off gas stream, and
- combining the first portion and the third off-gas stream and introducing the first portion and the third off-gas stream into the first pressure swing adsorption device, thereby producing the first high purity gas stream and the first off gas stream.

Such a second stream is acting as a purified gas stream.

In one embodiment, the method further comprising:
- introducing the permeate stream along with a first oxygen-containing stream into a first catalytic oxidation unit, thereby producing a first oxidized stream, and
- introducing the first oxidized stream into the second pressure swing adsorption device, thereby producing the second stream and the second off-gas stream.

In one embodiment, the method further comprising:
- introducing the combined feed stream along with a second oxygen-containing stream into a second catalytic oxidation unit, thereby producing a second oxidized stream,
- dividing the second oxidized stream into a first fraction and a second fraction,
- introducing the second fraction into the third pressure swing adsorption device, thereby producing the second high purity product gas stream and the third off gas stream, and
- combining the first portion, the third off-gas stream and the first fraction and introducing the first portion, the third off gas stream and the first fraction into the first pressure swing adsorption device, thereby producing the first high purity gas stream and the first off gas stream.

The invention further proposes a method of purifying a gas composed of a product gas and one or more impurity gases, comprising:
- combining a first feed stream with a second stream thereby forming a combined feed stream,
- introducing the combined feed stream into a first pressure swing adsorption device, thereby producing a first high purity gas stream and a first off-gas stream,
- introducing a permeate stream into a second pressure swing adsorption device, thereby producing the second stream and a second off gas stream,
- combining a second feed stream with the first off gas stream and the second off-gas stream, thereby forming a combined membrane feed stream, and
- introducing the combined membrane feed stream into a membrane separation device, thereby producing a gas stream lean in high purity gas stream and the permeate stream.

Such a second stream is acting as a purified gas stream.

In one embodiment, the second stream is the permeate stream.

In one embodiment, the product gas is helium.

In one embodiment, the product gas is hydrogen.

In one embodiment, the method further comprising:
- introducing the permeate stream along with a first oxygen-containing stream into a first catalytic oxidation unit, thereby producing a first oxidized stream, and
- introducing the first oxidized stream into the second pressure swing adsorption device, thereby producing the second stream and the second off-gas stream.

In one embodiment, the method further comprising:
- introducing the combined feed stream along with a second oxygen-containing stream into a second catalytic oxidation unit, thereby producing a second oxidized stream, and
- introducing the second oxidized stream into the first pressure swing adsorption device, thereby producing the first high purity gas stream and the first off gas stream.

For a further understanding of the nature and objects for the present invention, reference should be made to the following detailed description, taken in conjunction with the accompanying drawings, in which like elements are given the same or analogous reference numbers and wherein:
Fig. 1 Figure 1 is a schematic representation of a process scheme, in accordance with one embodiment of the present invention.
Fig. 2 Figure 2 is another schematic representation of a process scheme, in accordance with one embodiment of the present invention.
Fig. 3 Figure 3 is another schematic representation of a process scheme, in accordance with one embodiment of the present invention.
Fig. 4 Figure 4 is another schematic representation of a process scheme, in accordance with one embodiment of the present invention.

Illustrative embodiments of the invention are described below. While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

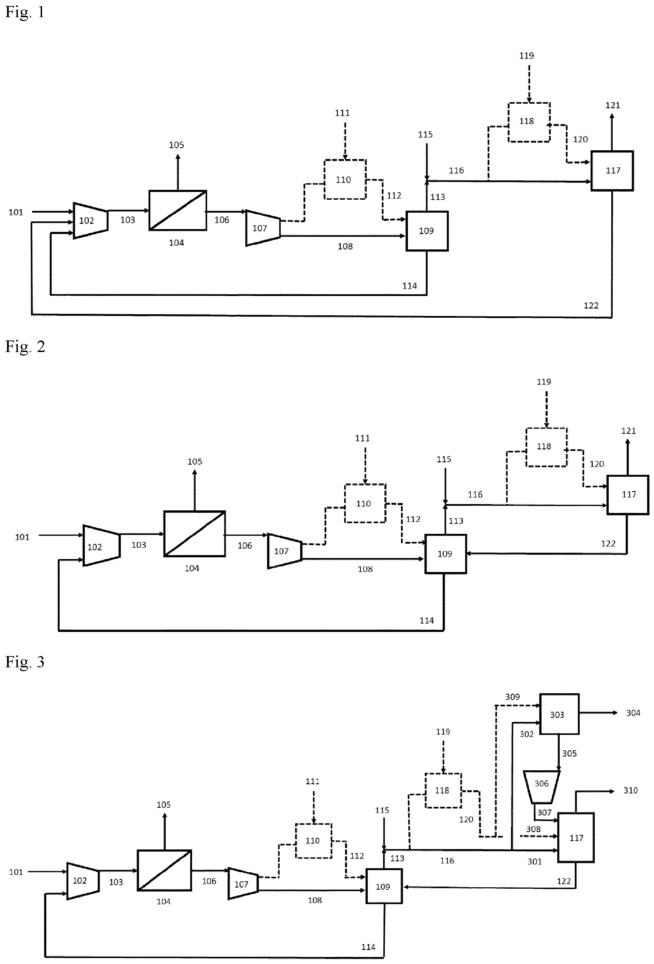

Turning now to Figure 1, a first embodiment of the present invention that may be utilized when raw helium feed stream 101 and purified helium feed stream 115 are available. Raw helium feed stream 101, second low-pressure off-gas stream 114, and first low-pressure off-gas stream 122 are increased in pressure in membrane feed compressor 102, thereby producing compressed membrane feed stream 103. Compressed membrane feed stream 103 is then fed into membrane unit 104, thereby producing high-pressure helium-lean residue stream 105 and low-pressure helium-enriched permeate stream 106. Low-pressure helium-enriched permeate stream 106 is then increased in pressure in permeate stream compressor 107, thereby producing pressurized permeate stream 108.

Pressurized permeate stream 108 may then be introduced directly into second pressure swing adsorption unit 109. Optionally, pressurized permeate stream 108 may be introduced into first catalytic oxidation unit 110 along with first oxygen-containing stream 111, thereby producing first oxidized stream 112. First oxidized stream 112 is then introduced into second pressure swing adsorption unit 109. Second pressure swing adsorption unit 109 thereby produces helium-rich gas stream 113 and second low-pressure off gas stream 114.

Helium-rich gas stream 113 is combined with purified helium feed stream 115, thereby producing helium-rich mixed gas stream 116. Helium-rich mixed gas stream 116 may then be introduced directly into first pressure swing adsorption unit 117. Optionally, helium-rich mixed gas stream 116 may be introduced into second catalytic oxidation unit 118 along with second oxygen-containing stream 119, thereby producing second oxidized stream 120. Second oxidized stream 120 is then introduced into first pressure swing adsorption unit 117. First pressure swing adsorption unit 117 thereby produces first high-purity helium stream 121 and first low-pressure off gas stream 122.

Turning now to Figure 2, another embodiment of the present invention that may be utilized when raw helium feed stream 101 and purified helium feed stream 115 are available. Raw helium feed stream 101 and second low-pressure off-gas stream 114 are increased in pressure in membrane feed compressor 102, thereby producing compressed membrane feed stream 103. Compressed membrane feed stream 103 is then fed into membrane unit 104, thereby producing high-pressure helium-lean residue stream 105 and low-pressure helium-enriched permeate stream 106. Low-pressure helium-enriched permeate stream 106 is then increased in pressure in permeate stream compressor 107, thereby producing pressurized permeate stream 108.

Pressurized permeate stream 108 may be combined with first low-pressure off-gas stream 122 and then be introduced directly into second pressure swing adsorption unit 109. Optionally, pressurized permeate stream 108 may be introduced into first catalytic oxidation unit 110 along with first oxygen-containing stream 111, thereby producing first oxidized stream 112. First oxidized stream 112 may be combined with first low-pressure off-gas stream 122 and then introduced into second pressure swing adsorption unit 109. Second pressure swing adsorption unit 109 thereby produces helium-rich gas stream 113 and second low-pressure off-gas stream 114.

Helium-rich gas stream 113 is combined with purified helium feed 115, thereby producing helium-rich mixed gas stream 116. Helium-rich mixed gas stream 116 may then be introduced directly into first pressure swing adsorption unit 117. Optionally, helium-rich mixed gas stream 116 may be introduced into second catalytic oxidation unit 118 along with second oxygen-containing stream 119, thereby producing second oxidized stream 120. Second oxidized stream 120 is then introduced into first pressure swing adsorption unit 117. First pressure swing adsorption unit 117 thereby produces first high-purity helium stream 121 and first low-pressure off gas stream 122.

Turning now to Figure 3, another embodiment of the present invention that may be utilized when raw helium feed stream 101 and purified helium feed stream 115 are available. Raw helium feed stream 101 and second low-pressure off-gas stream 114 are increased in pressure in membrane feed compressor 102, thereby producing compressed membrane feed stream 103. Compressed membrane feed stream 103 is then fed into membrane unit 104, thereby producing high-pressure helium-lean residue stream 105 and low-pressure helium-enriched permeate stream 106. Low-pressure helium-enriched permeate stream 106 is then increased in pressure in permeate stream compressor 107, thereby producing pressurized permeate stream 108.

Pressurized permeate stream 108 may be combined with first low-pressure off-gas stream 122 and then be introduced directly into second pressure swing adsorption unit 109. Optionally, pressurized permeate stream 108 may be introduced into first catalytic oxidation unit 110 along with first oxygen-containing stream 111, thereby producing first oxidized stream 112. First oxidized stream 112 may be combined with first low-pressure off-gas stream 122 and then introduced into second pressure swing adsorption unit 109. Second pressure swing adsorption unit 109 thereby produces helium-rich gas stream 113 and second low-pressure off-gas stream 114.

Helium-rich gas stream 113 is combined with purified helium feed 115, thereby producing helium-rich mixed gas stream 116. Helium-rich mixed gas stream 116 is split into first portion 301 and second portion 302. First portion 301 may then be introduced directly into first pressure swing adsorption unit 117. Second portion 302 is fed into third pressure swing adsorption unit 303. Third pressure swing adsorption unit 303 thereby produces second high-purity helium stream 304 and third low-pressure off gas stream 305. Third low-pressure off-gas stream 305 is compressed in off-gas compressor 306 and then compressed off gas stream 307 is introduced into first pressure swing adsorption unit 117.

Optionally, helium-rich mixed gas stream 116 may be introduced into second catalytic oxidation unit 118 along with second oxygen-containing stream 119, thereby producing second oxidized stream 120.

Second oxidized stream 120 may be split into first fraction 308 and second fraction 309. First fraction 308 may then be introduced directly into first pressure swing adsorption unit 117. Second fraction 309 is fed into third pressure swing adsorption unit 303. Third pressure swing adsorption unit 303 thereby produces second high-purity helium stream 304 and third low-pressure off gas stream 305. Third low-pressure off gas stream 305 is compressed in off-gas compressor 306 and then compressed off gas stream 307 is introduced into first pressure swing adsorption unit 117. First pressure swing adsorption unit 117 thereby produces first high-purity helium stream 310 and first low-pressure off gas stream 122.

The system presented in Figure 3 would be useful, for example, in situations where a helium liquefier facility is sufficiently close by. Wherein the feed may come from a pressurized gas storage thank that is filled by, for example, high pressure tube trailers. In such a case, the feed gas would typically contain 95 - 99% mol helium and the target product for the liquefaction would need to be greater than 99.9% helium. In such a situation, it would be possible for membrane unit 104, second PSA 109 and first PSA 117 to be part of an existing plant, and third PSA 303 is a new, purpose built PSA intended to handle the additional capacity.

It is noted that overall, the process schemes shown in Figures 1 - 3 offer similar solutions to the industry. If first PSA 117 is part of an existing system, and this first PSA 117 is sufficient to manage the extra helium from, for example, tube trailers, then the systems indicated in either Figure 1 or Figure 2 may be appropriate. If, however, this additional helium exceeds the capacity of the existing first PSA 117, then the system indicated in Figure 3 may be more appropriate.

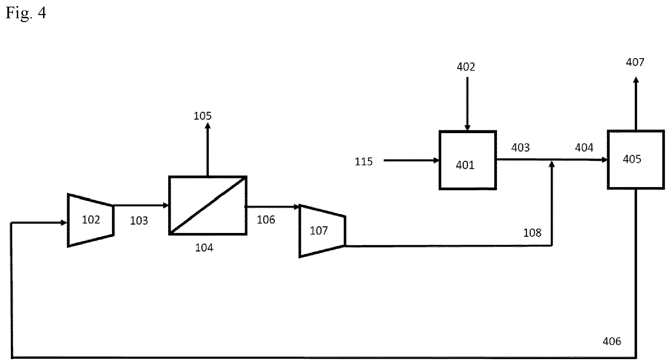

Turning now to Figure 4, another embodiment of the present invention that may be utilized when no raw helium feed stream 101 is available.

Purified helium feed 115 and first oxygen-containing stream 402 are introduced into first catalytic oxidation unit 401 thereby producing first oxidized stream 403. First oxidized stream 403 is combined with pressurized permeate stream 108, and combined pressure swing adsorption unit feed stream 404 is introduced into first pressure swing adsorption unit 405. First pressure swing adsorption unit 405 thereby produces first helium-rich gas stream 407 and first low-pressure off-gas stream 406.

First low-pressure off gas stream 406 is increased in pressure in membrane feed compressor 102, thereby producing compressed membrane feed stream 103. Compressed membrane feed stream 103 is then fed into membrane unit 104, thereby producing high-pressure helium-lean residue stream 105 and low-pressure helium-enriched permeate stream 106. Low-pressure helium-enriched permeate stream 106 is then increased in pressure in permeate stream compressor 107, thereby producing pressurized permeate stream 108.

It is noted that the system presented in Figure 4 would be useful, for example, in situations where a helium liquefier facility is sufficiently close by. Wherein the feed may come from a pressurized gas storage thank that is filled by, for example, high pressure tube trailers. In such a case, the feed gas would typically contain 95 - 99% mol helium and the target product for the liquefaction would need to be greater than 99.9% helium.

It will be understood that many additional changes in the details, materials, steps and arrangement of parts, which have been herein described in order to explain the nature of the invention, may be made by those skilled in the art within the principle and scope of the invention as expressed in the appended claims. Thus, the present invention is not intended to be limited to the specific embodiments in the examples given above.

Element Numbers:
- 101 = second feed stream (eg raw helium feed stream)
- 102 = membrane feed compressor
- 103 = combined membrane feed stream (eg compressed membrane feed stream)
- 104 = membrane separation device (eg membrane unit)
- 105 = gas stream lean in high purity gas stream (eg high-pressure helium-lean residue stream)
- 106 = permeate stream (eg low-pressure helium-enriched permeate stream)
- 107 = permeate stream compressor
- 108 = second stream (eg pressurized permeate stream)
- 109 = second pressure swing adsorption device (eg second pressure swing adsorption unit or second PSA)
- 110 = first catalytic oxidation unit
- 111= first oxygen-containing stream
- 112 = first oxidized stream
- 113 = second stream (eg helium-rich gas stream)
- 114 = second off gas stream (eg second low-pressure off gas stream)
- 115 = first feed stream (eg purified helium feed stream)
- 116 = combined feed stream (eg helium-rich mixed gas stream)
- 117 = first pressure swing adsorption device (eg first pressure swing adsorption unit or first PSA)
- 118 = second catalytic oxidation unit
- 119 = second oxygen-containing stream
- 120 = second oxidized stream
- 121 = first high purity gas stream (eg first high-purity helium stream)
- 122 = first off gas stream (eg first low-pressure off gas stream)
- 301 = first portion (eg of helium-rich mixed gas stream)
- 302 = second portion (eg of helium-rich mixed gas stream)
- 303 = third pressure swing adsorption device (eg third pressure swing adsorption unit or third PSA)
- 304 = second high purity gas stream (eg second high-purity helium stream)
- 305 = third off-gas stream (eg third low-pressure off gas)
- 306 = off-gas compressor
- 307 = compressed off gas stream
- 308 = first fraction (eg of second oxidized stream)
- 309 = second fraction (eg of second oxidized stream)
- 310 = first high purity gas stream (eg first-high purity helium stream
- 401 = first catalytic oxidation unit
- 402 = first oxygen-containing stream
- 403 = first oxidized feed stream (eg first oxidized stream)
- 404 = combined feed stream (eg combined pressure swing adsorption unit feed stream)
- 405 = first pressure swing adsorption device (eg first pressure swing adsorption unit or first PSA)
- 406 = first off gas stream (eg first low-pressure off gas stream)
- 407 = first high purity gas stream (eg first helium-rich gas stream)

## Claims

1. A method of purifying a gas composed of a product gas and one or more impurity gases, comprising:
- combining a first feed stream (115) with a second stream (108, 113) thereby forming a combined feed stream (404, 116),
- introducing the combined feed stream (404, 116) into a first pressure swing adsorption device (405, 117), thereby producing a first high purity gas stream (407, 121, 310) and a first off gas stream (406, 122), and
- introducing the first off gas stream (406, 122) into a membrane separation device (104), thereby producing a gas stream lean in high purity gas stream (105) and a permeate stream (106).

2. The method of claim 1, further comprising:
- introducing the first feed stream (115) along with a first oxygen-containing stream (402) into a first catalytic oxidation unit (401), thereby producing a first oxidized feed stream (403), and
- combining the first oxidized feed stream (403) with the second stream (108) thereby forming the combined feed stream (404).

3. The method of claim 1, further comprising:
- introducing the permeate stream (106) into a second pressure swing adsorption device (109), thereby producing the second stream (113) and a second off gas stream (114),
- combining a second feed stream (101) with the second off gas stream (114), thereby forming a combined membrane feed stream (103),
- introducing the combined membrane feed stream (103) into the membrane separation device (104), thereby producing the gas stream lean in high purity gas stream (105) and the permeate stream (106), and
- introducing the first off-gas stream (122) into the second pressure swing adsorption device (109).

4. The method of claim 3, further comprising:
- introducing at least a portion of the permeate stream (106) along with a first oxygen-containing stream (111) into a first catalytic oxidation unit (110) thereby producing a first oxidized stream (112), and
- introducing the first oxidized stream (112) into the second pressure swing adsorption device (109), thereby producing the second stream (113) and the second off gas stream (114).

5. The method of one of claims 3 or 4, further comprising:
- introducing at least a portion of the combined feed stream (116) along with a second oxygen-containing stream (119) into a second catalytic oxidation unit (118), thereby producing a second oxidized stream (120), and
- introducing the second oxidized stream (120) into the first pressure swing adsorption device (117), thereby producing the first high purity gas stream (121) and the first off-gas stream (122).

6. The method of claim 1, further comprising:
- introducing the permeate stream (106) into a second pressure swing adsorption device (109), thereby producing the second stream (113) and a second off gas stream (114),
- combining a second feed stream (101) with the second off gas stream (114), thereby forming a combined membrane feed stream (103),
- introducing the combined membrane feed stream (103) into the membrane separation device (104), thereby producing the gas stream lean in high purity gas stream (105) and the permeate stream (106),
- introducing the first off-gas stream (122) into the second pressure swing adsorption device (109),
- dividing the combined feed stream (116) into a first portion (301) and a second portion (302),
- introducing the second portion (302) into a third pressure swing adsorption device (303), thereby producing a second high purity gas stream (304) and a third off gas stream (305), and
- combining the first portion (301) and the third off gas stream (305) and introducing the first portion (301) and the third off-gas stream (305) into the first pressure swing adsorption device (117), thereby producing the first high purity gas stream (310) and the first off-gas stream (122).

7. The method of claim 6, further comprising:
- introducing the permeate stream (106) along with a first oxygen-containing stream (111) into a first catalytic oxidation unit (110), thereby producing a first oxidized stream (112), and
- introducing the first oxidized stream (112) into the second pressure swing adsorption device (109), thereby producing the second stream (113) and the second off gas stream (114).

8. The method of one of claims 6 or 7, further comprising:
- introducing the combined feed stream (116) along with a second oxygen-containing stream (119) into a second catalytic oxidation unit (118), thereby producing a second oxidized stream (120),
- dividing the second oxidized stream (120) into a first fraction (308) and a second fraction (309),
- introducing the second fraction (309) into the third pressure swing adsorption device (303), thereby producing the second high purity product gas stream (304) and the third off gas stream (305), and
- combining the first portion (301), the third off gas stream (305) and the first fraction (308) and introducing the first portion (301), the third off gas stream (305) and the first fraction (308) into the first pressure swing adsorption device (117), thereby producing the first high purity gas stream (310) and the first off gas stream (122).

9. A method of purifying a gas composed of a product gas and one or more impurity gases, comprising:
- combining a first feed stream (115) with a second stream (113) thereby forming a combined feed stream (116),
- introducing the combined feed stream (116) into a first pressure swing adsorption device (117), thereby producing a first high purity gas stream (121) and a first off-gas stream (122),
- introducing a permeate stream (106) into a second pressure swing adsorption device (109), thereby producing the second stream (113) and a second off-gas stream (114),
- combining a second feed stream (101) with the first off gas stream (122) and the second off gas stream (114), thereby forming a combined membrane feed stream (103), and
- introducing the combined membrane feed stream (103) into a membrane separation device (104), thereby producing a gas stream lean in high purity gas stream (105) and the permeate stream (106).

10. The method of claim 9, further comprising:
- introducing the permeate stream (106) along with a first oxygen-containing stream (111) into a first catalytic oxidation unit (110), thereby producing a first oxidized stream (112), and
- introducing the first oxidized stream (112) into the second pressure swing adsorption device (109), thereby producing the second stream (113) and the second off gas stream (114).

11. The method of one of claims 9 or 10, further comprising:
- introducing the combined feed stream (116) along with a second oxygen-containing stream (119) into a second catalytic oxidation unit (118), thereby producing a second oxidized stream (120), and
- introducing the second oxidized stream (120) into the first pressure swing adsorption device (117), thereby producing the first high purity gas stream (121) and the first off-gas stream (122).
